(19) Europäisches Patentamt
European Patent Office
Office européen des brevets

(11) **EP 3 776 000 B1**

## (12) EUROPÄISCHE PATENTSCHRIFT

(45) Veröffentlichungstag und Bekanntmachung des Hinweises auf die Patenterteilung:
**29.05.2024 Patentblatt 2024/22**

(21) Anmeldenummer: **19715825.6**

(22) Anmeldetag: **19.03.2019**

(51) Internationale Patentklassifikation (IPC):
***G01S 19/23*** *(2010.01)*

(52) Gemeinsame Patentklassifikation (CPC):
**G01S 19/23;** G01S 19/235

(86) Internationale Anmeldenummer:
**PCT/EP2019/056747**

(87) Internationale Veröffentlichungsnummer:
**WO 2019/192830 (10.10.2019 Gazette 2019/41)**

(54) **VERFAHREN ZUR ERMITTLUNG DER POSITION EINES FAHRZEUGS**

METHOD FOR DETERMINING THE POSITION OF A VEHICLE

MÉTHODE DE DÉTERMINATION DE LA POSITION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2018 DE 102018205205**

(43) Veröffentlichungstag der Anmeldung:
**17.02.2021 Patentblatt 2021/07**

(73) Patentinhaber: **Continental Automotive Technologies GmbH**
**30175 Hannover (DE)**

(72) Erfinder: **ZALEWSKI, Michael**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
EP-A1- 2 420 856     CN-A- 106 443 744
US-A1- 2012 065 883

**Beschreibung**

Die Erfindung betrifft ein Verfahren zur Ermittlung der Position eines Fahrzeugs sowie eine entsprechende Vorrichtung.

Neue Funktionen benötigen zunehmend präzisere Informationen über die Position und über die Orientierung eines Fahrzeuges.

Für die Lokalisierung mittels eines globalen Satellitennavigationssystems können mittels Codemessungen Pseudostrecken zwischen den jeweiligen Satelliten und einer Empfangseinrichtung und mittels Trägerphasenmessung Streckenunterschiede zwischen den verschiedenen Satelliten und der Empfangseinrichtung bestimmt und die Position des Empfängers berechnet werden. Für die Bestimmung der Pseudostrecken wird die Distanz zwischen dem Phasenzentrum der Empfangseinrichtung bzw. GNSS-Antenne und dem Phasenzentrum der Satellitenantenne per Laufzeitmessung ermittelt. Das Phasenzentrum einer Antenne ist ein virtueller Punkt auf den sich die Messung bezieht und der üblicherweise sowohl eine Richtungsabhängigkeit aufweist und zudem auch um einige Meter im Raum um die Antenne angeordnet sein kann, sogenannte Phasenzentrumsvariation. Aufgrund der verschiedenen Positionen der Satelliten kann sich daher auch für jeden Satelliten ein - zum Teil erheblich - abweichendes Phasenzentrum der GNSS-Antenne ergeben. Um die GNSS Positionsbestimmung nicht negativ zu beeinflussen, übermitteln die GNSS Satelliten Korrekturterme für das virtuelle Phasenzentrum der jeweiligen Satellitenantenne, um diese Effekte korrigieren zu können.

Die übliche Messgenauigkeit bei Codemessung liegt aktuell im Bereich einiger Meter, weshalb eine GNSS-Antenne herangezogen werden kann, deren Phasenzentrum eine Streuung im Bereich von Zentimetern bis Dezimetern aufweist und damit für die Auswertung nicht von wesentlicher Bedeutung sind. Für zukünftige Funktionen ist die Genauigkeit dieser Art GNSS-Empfänger unzureichend.

Für präzisere Anwendungen werden entsprechend präzise vermessene Antennen ohne wesentliche Richtungsabhängigkeit sowie eine leistungsfähigere Verarbeitungselektronik eingesetzt, wobei beispielsweise mittels der Trägerphasenmessung eine Genauigkeit im Millimeterbereich erzielt werden kann. Zur Kalibrierung wird unter Laborbedingungen das Phasenzentrum über einen möglichst großen Raumwinkel um die Antenne vermessen, wobei ein Sender die Antenne aus unterschiedlichen Richtungen mit einem Testsignal beaufschlagt. Hierbei sind die Position und Orientierung von Antenne und Sender bekannt. Dadurch kann in Abhängigkeit der Einstrahlrichtung die Position des Phasenzentrums beispielsweise relativ zum Antennenreferenzpunkt (ARP), sogenannter Phasenzentrumsoffset, bestimmt werden, welche zur Korrektur der Richtungsabhängigkeit des Phasenzentrums bei der Positionsbestimmung herangezogen werden. Alternativ oder zusätzlich können GNSS-Empfänger unter hohem Aufwand so konzipiert werden, dass sie eine sehr kleine Phasenzentrumsvariation von weniger als einem Zentimeter aufweisen. Durch zusätzliche Vermessungen und Korrekturen kann die Messgenauigkeit in den Sub-Millimeter Bereich erhöht werden. Nachteilig ist, dass entsprechend hochwertige GNSS-Empfänger bzw. Antennen sehr kostenintensiv sind und daher insbesondere in der einem hohen Kostendruck unterworfenen Fahrzeugzulieferindustrie für die Serienfertigung keine Berücksichtigung finden.

Ein Kalibrierverfahren zur Ermittlung von Korrekturinformationen für eine Empfangseinrichtung bzw. Antenne eines Fahrzeugs ist aus der beim Deutschen Patent- und Markenamt eingereichten Anmeldung mit dem Anmeldeaktenzeichen 10 2017 222 912.8 bekannt (zum Zeitpunkt dieser Anmeldung noch nicht veröffentlicht).

Um die Ermittlung der Fahrzeugposition zu verbessern, ist es bekannt, Sensordaten einer Sensoreinheit, beispielsweise einer inertialen Messeinheit (IMU) heranzuziehen und mit den Satellitendaten zu fusionieren bzw. so den Fehler der Positionsbestimmung zu verringern. Erfolgt dies nach einem Loosely-Coupled-Algorithmus, so werden von der Empfangseinrichtung fertig bereitgestellte Daten, wie Position, Geschwindigkeit, Zeit verwendet, während die Datenfusion beispielsweise bei einem Tightly-Coupled-Algorithmus bzw. Algorithmus mit enger Kopplung mittels Rohdaten, beispielsweise Pseudostrecken, Trägersignalphasen erfolgt. Es müssen nicht, wie bei den fertig bereitgestellten Daten, Signale von mindestens vier Satelliten vorliegen. Stattdessen reichen bei einem Tightly-Coupled-Algorithmus weniger Satelliten aus, da die Satellitensignale einzeln zur Datenfusion verwendet werden. Korrekturen bezüglich der Empfangseinrichtung sind dabei jedoch nicht vorgesehen, weshalb die Genauigkeit beschränkt ist.

Die CN 106 443 744 A betrifft ein GNSS-Standardisierungs- und Kalibrierungsverfahren für eine Doppelantennenanlage, das eine Standardisierung von Fehlerwinkeln und eine Korrektur von Daten dadurch ermöglicht, dass ein Strapdown Trägheitsnavigationssystem und eine GNSS-Doppelantenne auf derselben Plattform installiert sind, so dass der Standardisierungsprozess stark vereinfacht und die Betriebsschwierigkeiten verringert werden.

Die EP 2 420 856 A1 betrifft eine Vorrichtung zur dreidimensionalen Positionierung mit einer Sekundärradar-Basisstation, die zur Entfernungsmessung zu Transpondern vorgesehen ist und mindestens eine Radar-Antenne aufweist, einem GNSS-Empfänger, der zur Messung von GNSS-Signalen vorgesehen ist und eine GNSS-Empfangsantenne aufweist, einer Inertialmesseinheit, die dazu vorgesehen ist, die Lage der GNSS-Empfangsantenne sowie der mindestens einen Radar-Antenne in einem gemeinsamen Koordinatensystem in Bezug auf einen Referenzpunkt zu ermitteln, und einem Integrationsprozessor, dem Pseudorangemessungen des GNSS-Empfängers, Radar-Entfernungsmessungen und von der Inertialmesseinheit gemessene Bewegungen der Vorrichtung um die Achsen des gemeinsamen Koordinatensystems zugeführt werden und der eine dreidimensionale Position eines gemeinsamen Bezugspunktes durch Fusion der zugeführten Messungen und Daten ermittelt, wobei eine Hebelarmkompensation unter Berücksichtigung der gemessenen Bewegungen durchgeführt wird.

Es ist daher Aufgabe der Erfindung ein Verfahren zur effizienteren Ermittlung der Position eines Fahrzeugs anzugeben, das eine hohe bzw. verbesserte Genauigkeit mit einer möglichst kostengünstigen Empfangseinrichtung ermöglicht.

Diese Aufgabe wird durch die Gegenstände der unabhängigen Ansprüche gelöst. Bevorzugte Ausführungsformen der Erfindung sind Gegenstand der abhängigen Ansprüche und der Beschreibung.

Gemäß einem Aspekt der Erfindung umfasst ein Verfahren zur Ermittlung der Position eines Fahrzeugs mittels einer Sensoreinheit, einer Empfangseinrichtung zum Empfangen von Signalen eines Satelliten eines Satellitennavigationssystems, sowie einer elektronischen Filtereinrichtung die Schritte:

- Empfangen von Satellitendaten wenigstens eines Satelliten durch die Empfangseinrichtung und Empfangen bzw. Erfassen von Sensordaten durch die Sensoreinheit,
- Zuführen bzw. Bereitstellen der Sensordaten sowie der Satellitendaten an die Filtereinrichtung, wobei es sich bei den Satellitendaten um Rohdaten handelt,
- Umrechnen der Satellitendaten durch die Filtereinrichtung auf einen Bezugspunkt, der vorzugsweise der Position der Sensoreinheit entspricht,
- Ermitteln der Position des Fahrzeugs mittels der Filtereinrichtung durch Filtern und / oder Fusionieren der Satellitendaten und der Sensordaten.

Der Erfindung liegt der Gedanke zugrunde, dass das Ermitteln der Position des Fahrzeugs mittels der Filtereinrichtung durch Filtern und / oder Fusionieren der Satellitendaten und der Sensordaten, trotz einer gegebenenfalls nötigen Korrektur systembedingter Fehler, mit einem gemeinsamen Bezugspunkt stattfinden sollte, damit es nicht zu einer Verfälschung des Ergebnisses kommt. Bevorzugt handelt es sich dabei um die Position der Sensoreinheit.

Bei den Satellitendaten handelt es sich erfindungsgemäß um Rohdaten, insbesondere Pseudoentfernungen bzw. -strecken (Pseudoranges) und/oder Trägersignalphasen (Carrierphases & Deltaranges) sowie die aus Ephemeridendaten der jeweiligen Satelliten berechneten Satellitenpositionen. Die Satellitendaten sind, bevor sie umgerechnet werden, auf den Phasenzentrumspunkt der Empfangseinrichtung bezogen.

Erfindungsgemäß erfolgt das Umrechnen der Satellitendaten durch die Filtereinrichtung auf den Bezugspunkt ausgehend von einem Phasenzentrumspunkt der Empfangseinrichtung, vorzugsweise auf direktem Weg, also ohne Zwischenschritte. Somit erfolgt eine Korrektur des Versatzes zwischen dem von der Satellitenposition und Orientierung der Empfangseinrichtung abhängigen Phasenzentrumspunkt der Empfangseinrichtung und dem Bezugspunkt der Datenfusion. Der zu Grunde liegende Gedanke ist der, dass Korrekturen dieser Art normalerweise von der Empfangseinrichtung durchgeführt würden, dieser jedoch die notwendigen Informationen über den Abstand und die Richtung vom Phasenzentrumspunkt zum Bezugspunkt fehlen, da es sich um separate Einrichtungen handelt. Zwar wäre es möglich, beide miteinander zu verknüpfen, jedoch träten dadurch Zeitunterschiede auf, die die weiteren Berechnungen verfälschten.

Alternativ ist es möglich, dass die Empfangseinrichtung eine Korrektur dahingehend ausführt, dass sie eine Umrechnung zunächst auf den Antennenreferenzpunkt der Empfangseinrichtung durchführt. Der Antennenreferenzpunkt ist ein im globalen Koordinatensystem bestimmbarer Bezugspunkt der Empfangseinrichtung, häufig am tiefsten Punkt des Antennenkörpers auf der zentralen Achse. Die so bereits transformierten Daten müssten dann jedoch erneut auf den für die Datenfusion relevanten Bezugspunkt verschoben werden. Zudem entstehen zusätzliche Störeinflüsse, wenn die Antennenkorrektur bereits durch die Empfangseinrichtung eingebracht wird.

Erfindungsgemäß wird mittels der Umrechnung der Filtereinrichtung ein Versatz zwischen dem Bezugspunkt und dem Phasenzentrumspunkt korrigiert. Dies erfolgt vorzugsweise, indem der Abstand in der durch diese Punkte aufgespannten Richtung in die Satellitendaten eingerechnet wird. Entsprechend ändert sich beispielsweise die Signalphase bzw. der Pseudoabstand zwischen Satellit und Empfangseinrichtung für die weitere Berechnung.

Erfindungsgemäß zur Bestimmung des Phasenzentrumspunkts abhängig vom Ort des Satelliten relativ zum Ort und der Ausrichtung der Empfangseinrichtung und / oder des Fahrzeugs eine Kalibrierung durchgeführt. Dabei wird für verschiedenen Konstellationen, also gegenseitige Ausrichtungen und Positionen von Empfangseinrichtung und Satellit, die jeweils nötige Korrektur ermittelt.

Die Korrektur wird als Korrektur vom jeweiligen Phasenzentrumspunkt hin zum Bezugspunkt, der der Position der Sensoreinheit entspricht, bestimmt und abgespeichert.

Die Kalibrierung umfasst erfindungsgemäß die Schritte:

- Bestimmen einer ersten Abstandsinformation der Empfangseinrichtung zu einem Satelliten eines Satellitennavigationssystems,

- Erfassen einer Positionsinformation und einer Orientierungsinformation der Empfangseinrichtung auf Basis von Sensorinformationen,
- Bestimmen einer zweiten Abstandsinformation der Empfangseinrichtung zu dem Satelliten auf Basis der mittels Sensorinformationen erfassten Positionsinformation,
- Ermitteln einer Abweichung der ersten Abstandsinformation zu der zweiten Abstandsinformation,
- Bestimmen einer Korrekturinformation auf Basis der ermittelten Abweichung und
- Abspeichern der Korrekturinformation mit Bezug auf die mittels der Sensorinformationen erfasste Orientierungsinformation, insbesondere Ort und Ausrichtung der Empfangseinrichtung, in einem elektronischen Datenspeicher.

Dem liegt der Gedanke zugrunde, dass unter Heranziehung von auf unterschiedliche Arte und Weise gewonnenen Abstandsinformationen der Empfangseinrichtung zu einem Satelliten unter Berücksichtigung der Orientierung eine Schätzung von Korrekturinformationen zur Kompensation des Versatzes des winkelabhängigen Phasenzentrumspunkts der Empfangseinrichtung realisiert werden kann. Orientierungsinformationen in diesem Sinne sind vorzugsweise eine Orientierung der Empfangseinrichtung insbesondere mit Bezug auf ein globales Koordinatensystem beschreibende Informationen. Bei Satellitennavigationssystemen werden üblicherweise die jeweiligen Satellitenpositionen mit den Ephemeriden übertragen, sodass diese Positionen grundsätzlich als bekannt vorausgesetzt werden können. Die erste Abstandsinformation lässt sich beispielsweise anhand der Signallaufzeit der von dem Satelliten an die Antenne übertragenen Daten ermitteln oder als Empfangsintensität des Signals. Demnach ist die Vergleichbarkeit der Abstandsinformationen von bevorzugtem Interesse. Ein absoluter Abstandswert zu dem Satelliten braucht demnach nicht notwendigerweise zu Grunde gelegt werden. Beispielsweise lässt sich auch eine Empfangsintensität mit einer erwarteten Empfangsintensität vergleichen. Beiden ist eine Abstandsinformation inhärent. Diese Vorgehensweise ist bereits für globale Satellitennavigationssysteme bekannt.

Die Kalibrierung kann vorzugsweise zumindest teilweise während einer Kalibrierfahrt mit einem die Antenne aufweisenden Fahrzeug oder in einem Labor, wobei die Empfangseinrichtung unter Laborbedingungen mit Signalen von Navigationssatelliten bestrahlt wird.

Liegt ein richtungsabhängiger Versatz des Phasenzentrums vor, ergibt sich bei gegebener Ausrichtung der Empfangseinrichtung für jedes empfangene Satellitensignal ein unterschiedlicher Phasenzentrumsoffsetwert, welcher bei dessen Kenntnis entsprechend kompensierbar ist. Das erfindungsgemäße Verfahren wird entsprechend zweckmäßigerweise für eine Mehrzahl von Satelliten eines oder mehrerer Satellitennavigationssysteme durchgeführt. Auf Grundlage der mit den Ephemeriden übertragenen Satellitenposition besteht bei erworbener Kenntnis der Orientierung und ermittelter richtungsabhängiger Korrekturparameter die Möglichkeit die Empfangsrichtung jedes Satelliten in Bezug auf die Richtungsabhängigkeit des Phasenzentrumsoffsets zu berücksichtigen.

Es ist bevorzugt, dass der Ort des Phasenzentrumspunkts abhängig vom Ort des Satelliten relativ zum Ort und der Ausrichtung der Empfangseinrichtung und / oder des Fahrzeugs aus einem elektronischen Datenspeicher entnommen wird.

Nach einer bevorzugten Weiterbildung wird der Ort des Phasenzentrumspunkts ausgehend von einem aktuellen Ort des Satelliten relativ zum Ort und der Ausrichtung der Empfangseinrichtung auf den Zeitpunkt interpoliert, der dem Empfang der Satellitendaten durch die Empfangseinrichtung entspricht. Somit wird der Ort des Phasenzentrumspunkts für die Umrechnung bzw. Transformation mit dem Zeitpunkt des Empfangs der Satellitendaten synchronisiert. Dies hat den Vorteil, dass aufgrund dieser, zweckmäßigerweise zeitlich nach hinten gerichteten, Interpolation der Ort des Phasenzentrumspunkts weniger häufig bestimmt werden muss.

Bevorzugt ist die Sensoreinheit zur Erfassung von Messdaten der Fahrdynamik, insbesondere Beschleunigungs- und / oder Drehratendaten des Fahrzeugs um die Hauptachsen ausgebildet. Bevorzugt umfasst die Sensoreinheit eine inertiale Messeinrichtung. Die von der Sensoreinheit ausgegebenen Sensordaten, insbesondere Fahrdynamikdaten, können dabei Längsbeschleunigungen, Querbeschleunigungen, Höhenbeschleunigungen, Gierraten, Wankraten und / oder Nickraten umfassen. Diese Sensordaten werden vorzugsweise herangezogen, um den Informationsgehalt der Satellitendaten zu steigern und beispielsweise die Position und die Geschwindigkeit des Fahrzeugs auf einer Fahrbahn zu präzisieren. Zu den Sensordaten gehören nach einer bevorzugten Weiterbildung auch Odometriedaten bzw. die Sensordaten können um diese ergänzt werden. Odometriedaten beschreiben eine Abschätzung von Position und Orientierung eines Fahrzeugs anhand seines Vortriebsystems und umfassen beispielsweise die von einem Steuergerät bzw. Sensor ausgegebenen Raddrehwinkelimpulse und die Lenkwinkel einzelner Räder.

Bevorzugt handelt es sich bei den Satellitendaten um Rohdaten, insbesondere erfolgt das Filtern der Satellitendaten und der Sensordaten mittels eines Tightly-Coupling-, Deeply-Coupling-, Ultra-Tightly-Coupling- oder einem anderen Algorithmus und nicht mit einem Loosely-Coupling-Algorithmus, der keine Rohdaten, sondern bereits beispielsweise zu Positions- bzw. Geschwindigkeitsdaten im globalen Koordinatensystem verarbeitete Informationen verwendet.

Die Anwendung des Verfahrens bei einem Deeply-Coupling-Algorithmus der Filtereinrichtung, erlaubt durch Anbringung der korrekten Hebelarme und unterschiedlichen Phasenzentren, entsprechend unterschiedlicher Signallaufzeiten, eine gezieltere Ansteuerung der Nachlaufschleifen (Tracking-loops), wodurch in Phase gemessen werden kann. Dies verkürzt die Signalausfallzeit nach Signalabriss gegenüber nicht vom Phasenzentrumspunkt auf den Bezugspunkt umgerechneten Messungen, die dann außer Phase messen und sich wieder einschwingen müssen.

Es ist bevorzugt, dass es sich bei den Satellitendaten um Werte einer Pseudodistanz zwischen Satellit und Empfangseinrichtung und / oder der an der Empfangseinrichtung vorliegenden Phasenlage des Signals handelt. Bevorzugt wird das Verfahren in Zusammenhang mit einem PPP-Verfahren (Precise Point Positioning) oder RTK-Verfahren (Real-Time-Kinematik) angewendet.

Nach einer bevorzugten Weiterbildung ist die Empfangseinrichtung zum Empfangen von Daten einer Referenzstation ausgebildet, wobei das Verfahren alle Schritte betreffend die Satellitendaten auch für Daten der Referenzstation umfasst. Statt bzw. zusätzlich zu Satellitendaten können somit Daten von Referenzstationen, insbesondere geodätischen Empfängern bzw. Zweifrequenz-Empfängern für GNSS-Satellitensysteme, gemäß einem Echtzeitkinematik-System (RTK) mit dem erfindungsgemäßen Verfahren verarbeitet werden.

Das Umrechnen der Satellitendaten durch die Filtereinrichtung auf einen Bezugspunkt, der der Position der Sensoreinheit entspricht wird vorzugsweise mehrfach bzw. schleifenartig wiederholt. Entsprechend ist es daher denkbar, dass eine Messung bzw. ein Empfang von Satellitendaten mit mehreren Empfangseinrichtungen durchgeführt wird, ohne dass diese relativ zum Bezugspunkt den gleichen Ort und die gleiche Ausrichtung aufweisen müssen. Daher wird gemäß einer vorteilhaften Weiterbildung mehr als eine Empfangseinrichtung verwendet, wobei jede der Empfangseinrichtungen die Schritte

- Empfangen von Satellitendaten eines Satelliten,
- Zuführen der Satellitendaten an die Filtereinrichtung ausführt. Dies ist hinsichtlich Zuverlässigkeit, Redundanz bzw. auch Präzision der Positionsbestimmung vorteilhaft. Besonders vorteilhaft sind mehrere Empfangseinrichtungen auch dahingehend, dass wenn das Umrechnen der Satellitendaten durch die Filtereinrichtung auf den Bezugspunkt auf direktem Weg ausgehend von einem Phasenzentrumspunkt der Empfangseinrichtung erfolgt, das Verfahren prinzipiell gleich bleibt und keine Anpassung für die verschiedenen Empfangseinrichtungen erfordert, da es keine grundlegende Rolle spielt, wie groß der Abstand zwischen dem Phasenzentrum der jeweiligen Empfangseinrichtung und dem Bezugspunkt ist.

Es ist bevorzugt, dass eine Fahrzeugorientierung auf Basis der Sensordaten, der Satellitendaten und des Versatzes zwischen dem Bezugspunkt und dem Phasenzentrumspunkt ermittelt wird.

Bevorzugt erfolgt die Transformation bzw. das Umrechnen der Satellitendaten ausschließlich durch die Filtereinrichtung, wird also nicht zusätzlich auch in anderen Teilmodulen durchgeführt. Dies steigert die Verfügbarkeit, Genauigkeit und Konsistenz bei gleichzeitig reduziertem Berechnungsaufwand. Nach einer Weiterbildung wird eine Umrechnung der Satellitendaten durch die Filtereinrichtung auf den Bezugspunkt ausgehend von einem Phasenzentrumspunkt mehrfach, d. h. für jedes Satellitensignal einzeln und unabhängig, für das Ermitteln der Position des Fahrzeugs verwendet.

Die Erfindung betrifft weiterhin eine Vorrichtung zur Ermittlung der Position eines Fahrzeugs, ausgebildet zur Durchführung wenigstens einer Ausführungsform des erfindungsgemäßen Verfahrens, umfassend eine Sensoreinheit, eine Empfangseinrichtung zum Empfangen von Signalen eines Satelliten eines Satellitennavigationssystems, sowie eine elektronische Filtereinrichtung.

Die Vorrichtung umfasst vorzugsweise einen Prozessor, welcher ausgebildet ist, eine geographische Position des Fahrzeugs anhand von mittels der Empfangseinrichtung empfangenen Signalen von Satelliten zu bestimmen. Der Prozessor kann alternativ oder in Ergänzung zur Bestimmung der Orientierung des Fahrzeugs unter Heranziehung von Sensorsignalen und/oder der Satellitensignale ausgestaltet sein.

Gemäß einer bevorzugten Ausführungsform ist die Vorrichtung zum Empfang und zur Verarbeitung von NAVSTAR GPS-, GLONASS-, GALILEO- und/oder BEIDOU-Satellitensignalen ausgestaltet.

Gemäß einer bevorzugten Ausführungsform umfasst die Vorrichtung ferner einen elektronischen Datenspeicher zum Speichern von Daten.

Die Vorrichtung kann in Autos, in Flugzeugen oder in Schiffen angebracht werden.

Die Erfindung wird nachfolgend anhand eines Ausführungsbeispiels näher erläutert. In stark schematisierter Darstellung zeigt dabei

Fig. 1    den Einfluss verschiedener Phasenzentrumspunkte während einer Kurvenfahrt

Fig. 2    eine Empfangseinrichtung sowie einen Satellit eines Satellitennavigationssystems.

Bei einem GNSS-System wird grundsätzlich die Satellitenposition mit den Ephemeriden übertragen. Aus diesen Werten kann mit Hilfe der Pseudostrecke zwischen Satellit und Fahrzeug die Position des Fahrzeugs und somit auch die Empfangsrichtung bestimmt werden. Nachfolgend ist eine sehr vereinfachte herkömmliche Berech-nungsgrundlage einer Pseudostrecke PSRARP eines Satelliten zum Antennenreferenzpunkt ARP dargestellt.

Azimut = 150° ; Elevation = 30°
Pseudostrecke (PSR) = 22123.456,400 m
Phasenzentrumsoffset (PZO) = 1,45 m
PSRARP = PSR - PZO = 22123.456,400 m - 1,45 m = 22123454,950m

Während der Fahrt des Autos ändert sich z.B. bei Kurvenfahrten die Orientierung der Empfangseinrichtung bezogen auf einen Satelliten und wird ein anderer Korrekturwert bspw. für den Azimut ausgewählt, sodass sich ein von obigem abweichender Versatz des Phasenzentrumspunkts, Phasenzentrumsoffset (PZO) genannt, für den jeweiligen Satelliten ergibt. Beispielsweise dreht das Fahrzeug 10° nach links, wobei die Elevation gleich bleibt und das Azimut steigt:

Azimut = 160° ; Elevation = 30°
PSR = 22123.456,400 m
Phasenzentrumsoffset (PZO) - 1,7 m
PSRARP = PSR - PZO = 22123.456,400 m-1,70 m = 22123454,700 m

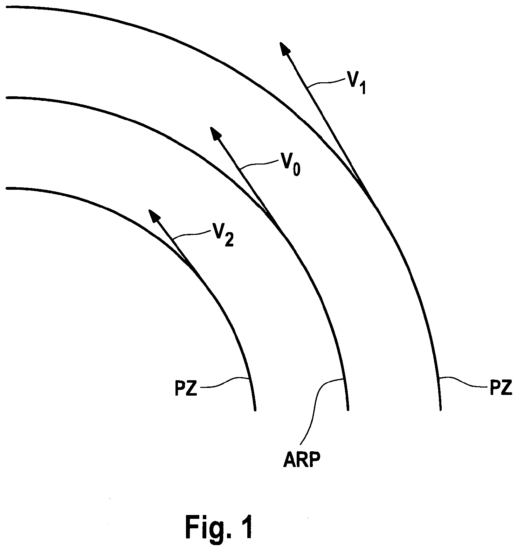

In Fig. 1 ist dargestellt, wie sich bei einer Kurvenfahrt des Fahrzeugs abhängig davon, ob der Phasenzentrumspunkt PZ relativ zum Antennenreferenzpunkt ARP weiter im Kurveninneren oder Kurvenäußeren liegt, die so erfassten Werte für die zurückgelegte Strecke, Geschwindigkeit und Bewegungsrichtung verändern. Es versteht sich, dass je nach Ort des Satelliten nur einer der beiden dargestellten Phasenzentrumspunkte PZ auftritt. Entsprechend entstehen, sofern keine Korrektur durchgeführt wird, verfälschte Informationen, die für Anwendungen mit einer hohen geforderten Präzision nicht ausreichend sind.

Liegt ein richtungsabhängiger Versatz des Phasenzentrumspunkts PZ vor, ergibt sich bei gegebener Ausrichtung der Empfangseinrichtung für jedes empfangene Satellitensignal ein unterschiedlicher Offsetwert, welcher bei Kenntnis des Phasenzentrumsoffsets entsprechend kompensiert werden kann. Diese Berechnung kann bei Loosely-Coupled-Algorithmen für jeden empfangenen Satelliten durchgeführt werden, so dass sich alle Pseudostrecken Messungen auf den gleichen Antennenreferenzpunkt ARP beziehen. Mit diesen korrigierten Daten könnte anschließend eine präzisierte Bestimmung der Eigenposition erfolgen. Falls solche Antennenkorrekturen verwendet werden, sind diese herkömmlicherweise in die Empfangseinrichtung implementiert, die mit einer solchen Korrektur eine präzisere Positionsbestimmung vornehmen kann.

Bei einem entsprechenden Algorithmus, beispielsweise einem Tightly-Coupling-Algorithmus, der in der Filtereinrichtung ausgeführt wird und der keine bereits von der Empfangseinrichtung bestimmten Positionsdaten, sondern die GNSS-Rohdaten von Navigationssatelliten nutzt, ist eine Antennenkorrektur jedoch nicht ohne Weiteres möglich.

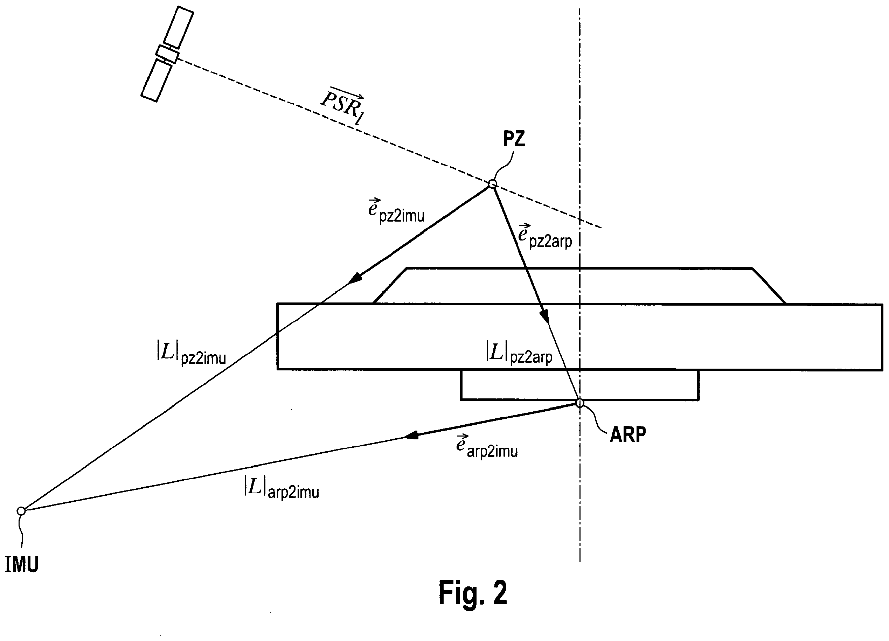

In Figur 2 werden Rechenschritte zum Umrechnen von Satellitendaten auf einen Bezugspunkt schematisch aufgezeigt.

Wie zuvor bereits erläutert, ist eine Korrektur des Versatzes eines aktuellen Phasenzentrumspunkts PZ möglich, indem der Versatz gegenüber dem Antennenreferenzpunkt ARP herausgerechnet wird. Dazu muss der der unter anderem von der Satellitenposition abhängige aktuelle Phasenzentrumspunkt PZ durch ein Kalibrierverfahren bekannt sein. Bei einem Algorithmus in der Filtereinrichtung, der GNSS-Rohdaten verwendet und mit Sensordaten, beispielsweise einer inertialen Messeinheit, fusioniert, ist es jedoch erfindungsgemäß sinnvoll, für die Fusion einen gemeinsamen Bezugspunkt zu haben, der dem Ort der Sensoreinheit IMU entspricht und damit dem Ort auf den sich die Sensordaten beziehen, so dass sich der Berechnungsaufwand in Grenzen hält.

Wird der durch den Versatz des Phasenzentrumspunkts PZ gegenüber dem Antennenreferenzpunkt ARP entstehende Fehler durch die Empfangseinrichtung kompensiert, liegt der Bezugspunkt jedoch im Antennenreferenzpunkt ARP und nicht dort wo er zweckmäßigerweise liegen sollte, nämlich dort wo die Sensoreinheit IMU verortet ist. Mit einem aus einem zuvor durchgeführten Kalibrierverfahren bekannten Hebelarm |L|_pz2arp in Richtung e_pz2arp berechnet sich die Antennenkorrektur für die Pseudostrecke PSR_i, deren Richtung durch die Ephemeridendaten bekannt ist, zu

$$\overrightarrow{PSR_i} + |L|_{pz2arp} * \vec{e}_{pz2arp}.$$

Entsprechend müssen die so transformierten Daten nochmals transformiert werden, diesmal jedoch vom Antennenreferenzpunkt ARP zum Bezugspunkt IMU. Für diese Berechnung fehlt der Empfangseinrichtung jedoch die Information über Abstand und Richtung vom Antennenreferenzpunkt ARP zum Bezugspunkt IMU, |L|_arp2imu und e_arp2imu. Zudem entstehen zusätzliche Störeinflüsse, wenn die Antennenkorrektur bereits auf Ebene der Empfangseinrichtung durchgeführt wird, da die Fahrzeugorientierung hier nicht oder nur mit reduzierter Genauigkeit vorhanden ist.

Vorteilhafterweise wird daher die gesamte Transformation bzw. Umrechnung

$$\overrightarrow{PSR_i} + |L|_{pz2arp} * \vec{e}_{pz2arp} + |L|_{arp2imu} * \vec{e}_{arp2imu}$$

in die Filtereinrichtung implementiert und dort ausgeführt.

Dabei entspricht |L|_arp2imu multipliziert mit e_arp2imu einem festen Wert, der lediglich von der gleichbleibenden Anordnung im Fahrzeug abhängt, also konstant ist. Entsprechend kann die Berechnung weiter vereinfacht werden zu

$$\overrightarrow{PSR_i} + |L|_{pz2imu} * \vec{e}_{pz2imu} .$$

Durch die Umrechnung in der Filtereinheit anstatt der Empfangseinrichtung, ist somit eine Antennenkorrektur auch dann möglich, wenn bei der Fusion mit Sensordaten GNSS-Rohdaten verwendet werden. Das Verfahren ist dabei unabhängig davon, ob das Phasenzentrum der Empfangseinrichtung nur einige Millimeter oder einige Meter vom Antennenreferenzpunkt ARP entfernt ist.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden.

**Patentansprüche**

1. Verfahren zur Ermittlung der Position eines Fahrzeugs mittels einer Sensoreinheit, IMU, einer Empfangseinrichtung zum Empfangen von Signalen wenigstens eines Satelliten eines Satellitennavigationssystems, sowie einer elektronischen Filtereinrichtung, umfassend die Schritte:

   - Empfangen von Satellitendaten eines Satelliten durch die Empfangseinrichtung und von Sensordaten durch die Sensoreinheit, IMU,
   - Zuführen der Sensordaten sowie der Satellitendaten an die Filtereinrichtung, wobei es sich bei den Satellitendaten um Rohdaten handelt,
   - Umrechnen der Satellitendaten durch die Filtereinrichtung auf einen Bezugspunkt, der der Position der Sensoreinheit, IMU, entspricht,
   - Ermitteln der Position des Fahrzeugs mittels der Filtereinrichtung durch Filtern und / oder Fusionieren der Satellitendaten und der Sensordaten,
   wobei das Umrechnen der Satellitendaten durch die Filtereinrichtung auf den Bezugspunkt ausgehend von einem Phasenzentrumspunkt, PZ, der Empfangseinrichtung erfolgt und mittels der Umrechnung der Filtereinrichtung ein Versatz zwischen dem Bezugspunkt und dem Phasenzentrumspunkt, PZ, korrigiert wird,
   **dadurch gekennzeichnet, daß** zur Bestimmung des Phasenzentrumspunkts, PZ, eine Kalibrierung abhängig vom Ort des Satelliten relativ zum Ort und der Ausrichtung der Empfangseinrichtung und / oder des Fahrzeugs durchgeführt wird, und wobei die Kalibrierung die Schritte umfasst:

   - Bestimmen einer ersten Abstandsinformation der Empfangseinrichtung zu einem Satelliten eines Satellitennavigationssystems,
   - Erfassen einer Positionsinformation und einer Orientierungsinformation der Empfangseinrichtung auf Basis von Sensorinformationen,
   - Bestimmen einer zweiten Abstandsinformation der Empfangseinrichtung zu dem Satelliten auf Basis der mittels Sensorinformationen erfassten Positionsinformation,
   - Ermitteln einer Abweichung der ersten Abstandsinformation zu der zweiten Abstandsinformation,
   - Bestimmen einer Korrekturinformation auf Basis der ermittelten Abweichung und
   - Abspeichern der Korrekturinformation mit Bezug auf die mittels der Sensorinformationen erfasste Orientierungsinformation, insbesondere Ort und Ausrichtung der Empfangseinrichtung, in einem elektronischen Datenspeicher.

2. Verfahren nach einem der vorhergehenden Ansprüche, wobei der Ort des Phasenzentrumspunkts, PZ, abhängig vom Ort des Satelliten relativ zum Ort und der Ausrichtung der Empfangseinrichtung und / oder des Fahrzeugs aus einem elektronischen Datenspeicher entnommen wird.

3. Verfahren nach Anspruch 2, wobei der Ort des Phasenzentrumspunkts, PZ, ausgehend von einem aktuellen Ort des Satelliten relativ zum aktuellen Ort und der Ausrichtung der Empfangseinrichtung auf den Zeitpunkt interpoliert wird, der dem Empfang der Satellitendaten durch die Empfangseinrichtung entspricht.

4. Verfahren nach einem der vorhergehenden Ansprüche, wobei die Sensoreinheit, IMU, zur Erfassung von Messdaten der Fahrdynamik, insbesondere Beschleunigungs- und / oder Drehratendaten des Fahrzeugs ausgebildet ist.

5. Verfahren nach einem der vorhergehenden Ansprüche, wobei das Filtern der Satellitendaten und der Sensordaten mittels eines Tightly-Coupling- oder Deeply-Coupling- oder Ultra-Tightly-Coupling Algorithmus erfolgt.

6. Verfahren nach einem der vorhergehenden Ansprüche, wobei es sich bei den Satellitendaten um Werte einer Pseudodistanz zwischen Satelliten und Empfangseinrichtung und / oder der an der Empfangseinrichtung vorliegenden Phasenlage des Signals handelt.

7. Verfahren nach einem der Ansprüche 1 bis 5, wobei die Empfangseinrichtung zum Empfangen von Daten einer Referenzstation ausgebildet ist, wobei das Verfahren alle Schritte betreffend die Satellitendaten auch für Daten der Referenzstation umfasst.

8. Verfahren nach einem der vorhergehenden Ansprüche, wobei mehr als eine Empfangseinrichtung verwendet wird, wobei jede der Empfangseinrichtungen die Schritte

 - Empfangen von Satellitendaten eines Satelliten,
 - Zuführen der Satellitendaten an die Filtereinrichtung ausführt.

9. Verfahren nach einem der Ansprüche 1 bis 8, wobei eine Fahrzeugorientierung auf Basis der Sensordaten, der Satellitendaten und des Versatzes zwischen dem Bezugspunkt und dem Phasenzentrumspunkt, PZ, ermittelt wird.

10. Verfahren nach einem der Ansprüche 1 bis 9, wobei eine Umrechnung der Satellitendaten durch die Filtereinrichtung auf den Bezugspunkt ausgehend von einem Phasenzentrumspunkt, PZ, mehrfach für das Ermitteln der Position des Fahrzeugs verwendet wird.

11. Vorrichtung zur Ermittlung der Position eines Fahrzeugs, ausgebildet zur Durchführung eines Verfahrens nach einem der vorhergehenden Ansprüche, umfassend eine Sensoreinheit, IMU, eine Empfangseinrichtung zum Empfangen von Signalen eines Satelliten eines Satellitennavigationssystems, sowie eine elektronische Filtereinrichtung.

**Claims**

1. Method for determining the position of a vehicle by means of a sensor unit, IMU, a receiving device for receiving signals from at least one satellite of a satellite navigation system, and an electronic filter device, comprising the steps of:

 - receiving satellite data from a satellite by means of the receiving device and receiving sensor data by means of the sensor unit, IMU,
 - supplying the sensor data and the satellite data to the filter device, wherein the satellite data are raw data,
 - using the filter device to convert the satellite data to a reference point corresponding to the position of the sensor unit, IMU,
 - determining the position of the vehicle by means of the filter device by filtering and/or fusing the satellite data and the sensor data,

 wherein the satellite data are converted by the filter device to the reference point starting from a phase centre point, PZ, of the receiving device, and an offset between the reference point and the phase centre point, PZ, is corrected by means of the conversion by the filter device, **characterized in that**, in order to determine the phase centre point, PZ, a calibration is carried out on the basis of the location of the satellite relative to the location and the orientation of the receiving device and/or of the vehicle, and wherein the calibration comprises the steps of:

- determining first distance information between the receiving device and a satellite of a satellite navigation system,
- capturing position information and orientation information relating to the receiving device on the basis of sensor information,
- determining second distance information between the receiving device and the satellite on the basis of the position information captured by means of sensor information,
- determining a discrepancy between the first distance information and the second distance information,
- determining correction information on the basis of the determined discrepancy, and
- storing the correction information with reference to the orientation information captured by means of the sensor information, in particular the location and orientation of the receiving device, in an electronic data memory.

2. Method according to one of the preceding claims, wherein the location of the phase centre point, PZ, is taken from an electronic data memory on the basis of the location of the satellite relative to the location and orientation of the receiving device and/or of the vehicle.

3. Method according to Claim 2, wherein the location of the phase centre point, PZ, is interpolated, starting from a current location of the satellite relative to the current location and the orientation of the receiving device, to the point in time corresponding to the reception of the satellite data by the receiving device.

4. Method according to one of the preceding claims, wherein the sensor unit, IMU, is designed to capture measurement data relating to the driving dynamics, in particular acceleration and/or rotation rate data relating to the vehicle.

5. Method according to one of the preceding claims, wherein the satellite data and the sensor data are filtered by means of a tightly coupling or deeply coupling or ultra-tightly coupling algorithm.

6. Method according to one of the preceding claims, wherein the satellite data are values of a pseudo-distance between satellites and the receiving device and/or the phase angle of the signal present at the receiving device.

7. Method according to one of Claims 1 to 5, wherein the receiving device is designed to receive data from a reference station, wherein the method comprises all steps relating to the satellite data also for data from the reference station.

8. Method according to one of the preceding claims, wherein more than one receiving device is used, wherein each of the receiving devices carries out the steps of

- receiving satellite data from a satellite,
- supplying the satellite data to the filter device.

9. Method according to one of Claims 1 to 8, wherein a vehicle orientation is determined on the basis of the sensor data, the satellite data and the offset between the reference point and the phase centre point, PZ.

10. Method according to one of Claims 1 to 9, wherein a conversion of the satellite data by the filter device to the reference point starting from a phase centre point, PZ, is repeatedly used to determine the position of the vehicle.

11. Apparatus for determining the position of a vehicle, designed to carry out a method according to one of the preceding claims, comprising a sensor unit, IMU, a receiving device for receiving signals from a satellite of a satellite navigation system, and an electronic filter device.

**Revendications**

1. Procédé de détermination de la position d'un véhicule au moyen d'une unité de détection, IMU, d'un dispositif de réception destiné à recevoir des signaux d'au moins un satellite d'un système de navigation par satellite, et d'un dispositif de filtrage électronique, comprenant les étapes consistant à :

- recevoir des données de satellite d'un satellite par le dispositif de réception et des données de capteur par l'unité de détection, IMU,
- amener les données de capteur et les données de satellite au dispositif de filtrage, les données de satellite étant des données brutes,

- convertir les données de satellite par le biais du dispositif de filtrage en un point de référence correspondant à la position de l'unité de détection, IMU,
- déterminer la position du véhicule au moyen du dispositif de filtrage par filtrage et/ou fusion des données de satellite et des données de capteur,

la conversion des données de satellite par le biais du dispositif de filtrage au point de référence étant effectuée à partir d'un point de centre de phase, PZ, du dispositif de réception et un décalage entre le point de référence et le point de centre de phase, PZ, étant corrigé au moyen de la conversion du dispositif de filtrage, **caractérisé en ce que**, pour déterminer le point de centre de phase, PZ, un étalonnage est effectué en fonction de la position du satellite par rapport à la position et à l'orientation du dispositif de réception et/ou du véhicule, et l'étalonnage comprenant les étapes consistant à :

- déterminer une première information de distance du dispositif de réception par rapport à un satellite d'un système de navigation par satellite,
- détecter une information de position et une information d'orientation du dispositif de réception sur la base d'informations de capteur,
- déterminer une seconde information de distance du dispositif de réception par rapport au satellite sur la base de l'information de position détectée au moyen d'informations de capteur,
- calculer un écart entre la première information de distance et la seconde information de distance,
- déterminer une information de correction sur la base de l'écart calculé et
- mémoriser dans une mémoire de données électronique l'information de correction en référence à l'information d'orientation, notamment le lieu et l'orientation du dispositif de réception, détectée au moyen des informations de capteur.

2. Procédé selon l'une quelconque des revendications précédentes, dans lequel la position du point de centre de phase, PZ, est extraite d'une mémoire de données électronique en fonction de la position du satellite par rapport à la position et à l'orientation du dispositif de réception et / ou du véhicule.

3. Procédé selon la revendication 2, dans lequel la position du point de centre de phase, PZ, est interpolée à partir d'une position actuelle du satellite par rapport à la position actuelle et à l'orientation du dispositif de réception, à l'instant qui correspond à la réception des données de satellite par le dispositif de réception.

4. Procédé selon l'une quelconque des revendications précédentes, dans lequel l'unité de détection, IMU, est conçue pour détecter des données de mesure de la dynamique de conduite, notamment des données d'accélération et/ou de vitesse de rotation du véhicule.

5. Procédé selon l'une quelconque des revendications précédentes, dans lequel le filtrage des données de satellite et des données de capteur est effectué au moyen d'un algorithme de couplage étroit ou de couplage profond ou de couplage ultra étroit.

6. Procédé selon l'une quelconque des revendications précédentes, dans lequel les données de satellite sont des valeurs d'une pseudo-distance entre le satellite et le dispositif de réception et/ou de la position de phase du signal présente au niveau du dispositif de réception.

7. Procédé selon l'une quelconque des revendications 1 à 5, dans lequel le dispositif de réception est conçu pour recevoir des données d'une station de référence, le procédé comprenant également toutes les étapes relatives aux données de satellite pour les données de la station de référence.

8. Procédé selon l'une quelconque des revendications précédentes, dans lequel on utilise plus d'un dispositif de réception, chacun des dispositifs de réception exécutant les étapes consistant à

- recevoir des données de satellite d'un satellite,
- amener les données de satellite au dispositif de filtrage.

9. Procédé selon l'une quelconque des revendications 1 à 8, dans lequel une orientation du véhicule est déterminée sur la base des données de capteur, des données de satellite et du décalage entre le point de référence et le point de centre de phase, PZ.

**10.** Procédé selon l'une quelconque des revendications 1 à 9, dans lequel une conversion des données de satellite par le biais du dispositif de filtrage au point de référence à partir d'un point de centre de phase, PZ, est utilisée plusieurs fois pour déterminer la position du véhicule.

**11.** Dispositif de détermination de la position d'un véhicule, conçu pour mettre en oeuvre un procédé selon l'une quelconque des revendications précédentes, comprenant une unité de détection, IMU, un dispositif de réception destiné à recevoir des signaux d'un satellite d'un système de navigation par satellite, et un dispositif de filtrage électronique.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017222912
- CN 106443744 A
- EP 2420856 A1